# FASCICULE DE BREVET EUROPEEN

(11) **EP 0 737 652 B1**
(45) Date de publication et mention de la délivrance du brevet: **07.06.2000**
(21) Numéro de dépôt: 96400753.8
(22) Date de dépôt: 05.04.1996
(51) Int. Cl.: C03B 19/10, B01J 2/10

(54) **Procédé et dispositif de sphéroidisation de granules de silice**
Verfahren und Einrichtung zur Herstellung von kügelförmigen Granulaten aus Siliciumdioxid
Process and device to prepare spherical granules of silica

(30) Priorité: 10.04.1995 FR 9504252
(43) Date de publication de la demande: 16.10.1996
(73) Titulaire: ALCATEL, 75008 Paris (FR)
(72) Inventeur: Campion, Jean-Florent, 92270 Bois Colombes (FR); Fauche, Rémi, 95870 Bezons (FR); Rebreyend, Pierre, 59800 Lille (FR)
(74) Mandataire: Feray, Valérie

(56) Documents cités:
- EP-A- 0 224 659
- EP-A- 0 555 947
- EP-A- 0 578 553
- FR-A- 2 315 313
- PATENT ABSTRACTS OF JAPAN vol. 12, no. 84 (C-482), 17 Mars 1988 & JP-A-62 221434 (NARA YORIOKI ET AL.), 29 Septembre 1987,

## Description

La présente invention concerne la fabrication des poudres de silice et en particulier un procédé de fabrication d'une poudre de silice à granulés sphériques destinée plus particulièrement à la réalisation des préformes de fibres optiques.

La fabrication d'une préforme de fibre optique est bien connue dans la technique. Une méthode de fabrication décrite dans la demande de brevet FR-A-2.693.451 consiste à réaliser une suspension dans l'eau de suie synthétique de silice de surface spécifique inférieure à 80m²/g à raison de 50% à 75% en poids de silice, à gélifier la suspension, à sécher sous micro-ondes le gel obtenu, à fractionner le gel sec en granulés de silice de diamètre compris entre 10µ et 1mm, et à effectuer un tamisage entre 100µ et 500µ. Puis les granulés de silice obtenus subissent une densification dans un four à une température d'environ 1300°C avant d'être utilisés dans un procédé de dépôt plasma par projection et fusion sur une préforme primaire tel que décrit par exemple dans l'article de Le Sergent et al "Preform Technologies for Optical Fibers" dans Electrical Communication, Vol.62, N°314, 1988. La densification des granulés qui précède l'élaboration de la préforme a pour but d'accroître la vitesse de dépôt des granulés sur la préforme primaire.

Malheureusement, cette méthode de fabrication dite méthode sol-gel, présente l'inconvénient que les granulés obtenus n'ont pas la forme sphérique désirée ; ils sont plus généralement de forme rectangulaire ou ovoïde. Ceci pose un problème lors de l'utilisation de ces granulés pour la fabrication d'une préforme. En effet, la préforme réalisée contient des bulles de gaz emprisonnées entre les granulés. Ces bulles fragilisent la préforme et donc la fibre optique qui en résulte, en créant des micro contraintes qui risquent d'entraîner la rupture de la fibre optique. En outre, lorsque les granulés ne sont pas sphériques, ils ne s'écoulent pas bien dans la flamme du plasma lors de la fabrication de la préforme.

C'est pourquoi le but principal de l'invention est de réaliser un dispositif de sphéroïdisation des granulés pour application aux fibres optiques.

Un autre but de l'invention est de fournir un procédé pour rendre sphériques les granulés de silice destinés à la fabrication de préformes de fibres optiques.

Un objet de la présente invention est donc une méthode de sphéroïdisation de granulés de silice consistant à faire acquérir aux granulés une grande vitesse les maintenant en contact avec une paroi ayant une dureté sensiblement inférieure à celle de la silice de sorte que, du fait du roulement des granulés sur la paroi tout au long de la trajectoire entraînant une abrasion de leur surface, les granulés acquièrent une forme substantiellement sphérique.

Un autre objet de l'invention est un dispositif de sphéroïdisation de granulés de silice comprenant un cylindre dont l'axe est incliné par rapport à l'horizontale et dont la paroi intérieure est en un matériau ayant une dureté sensiblement inférieure à celle de la silice. Le cylindre comporte une goulotte d'entrée pour introduire les granulés de silice non sphériques située à la portion de paroi la plus haute du cylindre, et une goulotte de sortie des granulés de silice sphériques située à la portion de paroi la plus basse du cylindre. Un élément rotatif entraîné en rotation à grande vitesse par un arbre d'entraînement comporte au moins une pale destinée à projeter les granulés de silice introduits par la goulotte d'entrée sur la paroi du cylindre de façon à faire effectuer aux granulés une trajectoire sur la paroi et leur faire acquérir ainsi une forme sphérique due à l'abrasion subie par leur roulement sur la paroi du cylindre.

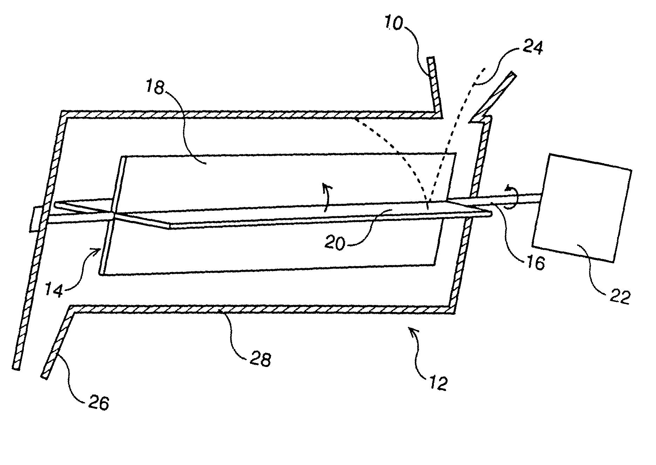

Les buts, objets et caractéristiques de l'invention apparaîtront mieux à la lecture de la description qui suit faite en référence à la figure unique représentant un dispositif de sphéroïdisation de granulés de silice selon un mode de réalisation préféré de l'invention.

Les granules de silices dont s'occupe la présente invention sont des granulés d'une taille comprise entre 10µ et 1mm qui ont été obtenus par fractionnement d'un gel de silice ; ils sont partiellement de forme ovoïde et partiellement de forme rectangulaire.

Dans le dispositif montré sur la figure, les granulés sont introduits dans une goulotte d'entrée 10 d'un cylindre 12 incliné d'environ 10° par rapport à l'horizontale, cette goulotte d'entrée étant placée à la partie la plus haute du cylindre.

Le cylindre 12 est pourvu d'un élément rotatif 14 entraîné en rotation autour d'un axe 16 coïncidant de préférence avec l'axe du cylindre, bien que l'on pourrait concevoir un autre dispositif où l'axe de rotation ne coïnciderait pas avec l'axe du cylindre. L'élément rotatif 14 comporte deux (ou plusieurs) pales ou aubes 18 et 20 représentées perpendiculairement l'une à l'autre sur la figure.

L'axe de rotation 16 est entraîné par un moteur 22 à une vitesse pouvant aller de 300 à 3000 tours/mn, une vitesse comprise entre 2000 et 3000 tours/mn étant préférable.

Lorsque les granulés 24 sont introduits dans le cylindre 12 par la goulotte 10, ils sont projetés à grande vitesse vers la paroi intérieure 28 du cylindre par une des pales, 18 ou 20, comme illustré sur la figure. Les particules ont alors tendance à effectuer une trajectoire en contact permanent avec la paroi intérieure 28, cette trajectoire étant hélicoïdale du fait de l'inclinaison du cylindre 12. Les granulés atteignent ainsi une goulotte de sortie 26 où ils sont récupérés, ou, si ils n'ont pas acquis une vitesse suffisante, retombent sur une des pales de l'élément rotatif pour être de nouveau projetés vers la paroi intérieure 28.

Une caractéristique essentielle de l'invention est que la paroi intérieure 28 du cylindre 12 est formée d'un matériau plastique ayant une dureté sensiblement inférieure à la dureté de la silice, telle qu'une matière plastique, une résine polyamide étant utilisée de préférence. Par conséquent les granulés ne subissent aucune destruction ou division par frottement sur la paroi 28, mais, à cause de leur grande vitesse, ils roulent sur la paroi en parcourant une certaine distance qui leur fait acquérir une forme substantiellement sphérique. La distance parcourue par les granulés sur la paroi est évidemment fonction de l'inclinaison et de la longueur du cylindre. Plus forte est l'inclinaison du cylindre, plus vite les granulés auront tendance à rejoindre la goulotte de sortie pour une même longueur de cylindre. Il faut donc prévoir une inclinaison optimum en fonction de la longueur du cylindre de façon à permettre un parcours suffisant des granulés sur la paroi pour que ceux-ci acquièrent une forme sphérique. L'inclinaison du cylindre comprise entre 10° et 20° est une fonction directe de sa longueur de préférence comprise entre 30 et 50cm.

Cette caractéristique consistant à faire parcourir une certaine distance à des granulés en rotation et à grande vitesse sur une paroi dont la dureté est sensiblement inférieure à celle de la silice pourrait être mise en oeuvre en utilisant un autre dispositif que celui qui vient d'être décrit, sans sortir du cadre de l'invention. Ainsi, la paroi pourrait être mobile (par exemple en rotation autour d'un axe), ou bien le cylindre pourrait être disposé verticalement.

Les granulés sphériques obtenus par la méthode selon la présente invention sont particulièrement adaptés pour être utilisés dans la fusion par plasma inductif permettant la réalisation de préformes pour fibres optiques, ceci grâce à l'absence totale de bulles dans le verre, contrairement à ce qui est observé avec les granulés de silice traditionnels qui n'ont pas subi le traitement tel que décrit ci-dessus.

## Revendications

1. Méthode de sphéroïdisation de granulés de silice consistant à faire acquérir aux granulés une grande vitesse les maintenant en contact avec une paroi (28) ayant une dureté sensiblement inférieure à celle de la silice de sorte que, du fait du roulement desdits granulés sur ladite paroi tout au long de leur trajectoire entraînant une abrasion de leur surface, lesdits granulés acquièrent une forme substantiellement sphérique.

2. Dispositif de sphéroïdisation mettant en oeuvre la méthode selon la revendication 1 comprenant :
un cylindre (12) dont l'axe est incliné par rapport à l'horizontale et dont la paroi intérieure (28) est en matériau ayant une dureté sensiblement inférieure à celle de la silice, ledit cylindre comportant une goulotte d'entrée (10) des granulés de silice (24) non sphériques située à la portion de paroi la plus haute dudit cylindre et une goulotte de sortie (26) des granulés de silice sphériques située à la portion de paroi la plus basse dudit cylindre, et
un élément rotatif (14) entraîné en rotation à grande vitesse par un arbre d'entraînement (16) coïncidant avec l'axe dudit cylindre, ledit élément rotatif comportant au moins une pale (18, 20) se trouvant à l'aplomb vertical de ladite goulotte d'entrée de manière à ce que les granulés de silice introduits par ladite goulotte d'entrée soient projetés par ladite pale contre la paroi intérieure dudit cylindre et effectuent une trajectoire dont la majeure partie se trouve sur ladite paroi avant de sortir par ladite goulotte de sortie.

3. Dispositif selon la revendication 2, dans lequel l'inclinaison dudit cylindre (12) est une fonction directe de la longueur dudit cylindre de façon à obtenir une longueur optimale de la trajectoire des granulés de silice (24) sur ladite paroi intérieure (28) permettant de récupérer des granulés de silice substantiellement sphériques à ladite goulotte de sortie (26).

4. Dispositif selon la revendication 3, dans lequel l'inclinaison dudit cylindre est comprise entre 10° et 20° et la longueur dudit cylindre est comprise entre 30 et 50 cm.

5. Dispositif selon la revendication 2, 3 ou 4, dans lequel ladite paroi intérieure (28) est en matière plastique.

6. Dispositif selon la revendication 5, dans lequel ladite matière plastique est une résine polyamide.

7. Procédé de fabrication d'une poudre de silice utilisée pour la réalisation de préformes pour fibres optiques comprenant les étapes de: réalisation d'une suspension dans l'eau de suie de silice, gélification de ladite suspension, séchage du gel obtenu, fractionnement du gel sec en granulés de silice et densification desdits granulés,
ledit procédé étant caractérisé en ce qu'il comporte en outre, immédiatement avant l'étape de densification, une étape de sphéroïdisation mettant en oeuvre la méthode selon la revendication 1.

## Patentansprüche

1. Verfahren zum Sphärischmachen von Siliziumdioxidkörnern, das darin besteht, den Körnern eine große Geschwindigkeit zu verleihen, die sie in Kontakt mit einer Wand (28) hält, die eine deutlich geringere Härte als die des Siliziumdioxids hat, so dass aufgrund des Abrollens der Körner an der'Wand auf ihrer Bahn, das zu einem Abschleifen ihrer Oberfläche führt, die Körner eine im Wesentlichen sphärische Form annehmen.

2. Vorrichtung zum Sphärischmachen, die das Verfahren nach Anspruch 1 anwendet, mit:
- einem Zylinder (12), dessen Achse im Bezug auf die Horizontale geneigt ist und dessen Innenwand (28) aus einem Material mit einer deutlich geringeren Härte als der des Siliziumdioxids besteht, wobei der Zylinder einen Eingangsstutzen (10) für nichtsphärische Siliziumdioxidkörner (24), der am höchstgelegenen Bereich des Zylinders angeordnet ist, und einen Ausgangsstutzen (26) für die sphärischen Siliziumdioxidkörner aufweist, der am tiefstgelegenen Wandabschnitt des Zylinders angeordnet ist, und
- einem drehbaren Element (14), das mit großer Geschwindigkeit durch eine Antriebswelle (16) drehangetrieben ist, die mit der Achse des Zylinders zusammenfällt, wobei das drehbare Element wenigstens eine Schaufel (18, 20) aufweist, die sich vertikal unter dem Eingangsstutzen befindet, so dass die durch den Eingangsstutzen eingespeisten Siliziumdioxidkörner von der Schaufel gegen die Innenwand des Zylinders geschleudert werden und eine Bahn durchlaufen, dessen größerer Teil sich an der Wand befindet, bevor sie durch den Ausgangsstutzen austreten.

3. Vorrichtung nach Anspruch 2, bei der die Neigung des Zylinders (12) eine direkte Funktion der Länge des Zylinders ist, um eine optimale Länge der Bahn der Siliziumdioxidkörner (24) an der Innenwand (28) zu erreichen, die es erlaubt, im Wesentlichen sphärische Siliziumdioxidkörner an dem Ausgangsstutzen (26) zu entnehmen.

4. Vorrichtung nach Anspruch 3, bei der die Neigung des Zylinders zwischen 10° und 20° beträgt und die Länge des Zylinders zwischen 30 und 50 cm beträgt.

5. Vorrichtung nach Anspruch 2, 3 oder 4, bei der die Innenwand (28) aus Plastikmaterial ist.

6. Vorrichtung nach Anspruch 5, bei der das Plastikmaterial ein Polyamidharz ist.

7. Verfahren zum Herstellen eines für die Anfertigung von Vorformen für optische Fasern verwendeten Siliziumdioxidpulvers mit den Schritten: Anfertigen einer wässrigen Suspension von Siliziumdioxidruss (suie de silice), Gelieren der Suspension, Trocknen des erhaltenen Gels, Fraktionieren des trockenen Gels in Siliziumdioxidkörner und Verdichten der Körner, dadurch gekennzeichnet, dass es ferner unmittelbar vor dem Schritt des Verdichtens einen Schritt des Spärischmachens umfasst, der das Verfahren nach Anspruch 1 einsetzt.

## Claims

1. Method of producing spheroidal grains of silica consisting in imparting a high speed to the grains and maintaining them in contact with a wall (28) that is significantly softer than silica so that abrasion of the surface of said grains as they roll along said wall throughout the length of their path thereon imparts a substantially spherical shape to said grains.

2. Device for implementing the method as claimed in claim 1, comprising:
a cylinder (12) having its axis inclined to the horizontal and an inside wall (28) made from a material that is significantly softer than silica, said cylinder having an entry chute (10) for non-spherical silica grains (24) at the highest point on the wall of said cylinder and an exit chute (26) for spherical silica grains at the lowest point on said wall of said cylinder, and
a rotary member (14) driven in rotation at high speed by a drive shaft (16) having its axis coincident with the axis of said cylinder, said rotary member including at least one paddle (18, 20) vertically aligned with said entry chute so that silica grains entering via said entry chute are thrown by said paddle against said inside wall of said cylinder and follow a path most of which is against said wall before leaving via said exit chute.

3. Device according to claim 2, characterized in that the inclination of said cylinder (12) is directly dependent on the length of said cylinder so as to obtain an optimum length of said path of said silica grains (24) on said inside wall (28) so that substantially spherical silica grains are recovered at said exit chute (26).

4. Device according to claim 3, characterized in that said inclination of said cylinder is between 10° and 20° and said length of said cylinder is between 30 cm and 50 cm.

5. Device according to claim 2, 3 or 4, characterized in that said inside wall (28) is of plastics material.

6. Device according to claim 5, characterized in that said plastics material is polyamide resin.

7. Method of making silica powder used to make optical fibre preforms, comprising
the steps of: making a suspension of silica soot in water, gelling said suspension, drying the gel obtained, fractioning said dried gel into silica grains and densifying said grains,
which method being characterized in that it further includes, immediately preceding said densification step, a step of rendering said grains spheroidal utilizing the method as claimed in claim 1.
